# FASCICULE DE BREVET EUROPEEN

(11) **EP 2 508 856 B1**
(45) Date de publication et mention de la délivrance du brevet: **22.05.2013**
(21) Numéro de dépôt: 12354006.4
(22) Date de dépôt: 17.01.2012
(51) Int. Cl.: G01J 1/42

(54) **Procédé et capteur pour rayonnement solaire, et fenètre active comprenant un tel capteur**
Verfahren und Sensor für die Sonneneinstrahlung, und aktives Fenster, das einen solchen Sensor umfasst
Method and collector for solar radiation, and active window including such a collector

(30) Priorité: 08.04.2011 FR 1101076
(43) Date de publication de la demande: 10.10.2012
(73) Titulaire: Schneider Electric Industries SAS, 92500 Rueil-Malmaison (FR)
(72) Inventeur: Perrin, Alain, 38050 Grenoble Cedex 09 (FR); Aurousseau, Valery, 38050 Grenoble Cedex 09 (FR)
(74) Mandataire: Picard, Laurent

(56) Documents cités:
- US-A- 5 455 415
- CHANG Y K ET AL: "Development of high-accuracy image centroiding algorithm for CMOS-based digital sun sensors", SENSORS AND ACTUATORS A, ELSEVIER SEQUOIA S.A., LAUSANNE, CH, vol. 144, no. 1, 28 mai 2008 (2008-05-28), pages 29-37, XP022620684, ISSN: 0924-4247, DOI: 10.1016/J.SNA.2007.12.018 [extrait le 2007-12-27]
- FEIFAN CHEN ET AL: "Digital sun sensor based on the optical vernier measuring principle", MEASUREMENT SCIENCE AND TECHNOLOGY, IOP, BRISTOL, GB, vol. 17, no. 9, 1 septembre 2006 (2006-09-01), pages 2494-2498, XP020103695, ISSN: 0957-0233, DOI: 10.1088/0957-0233/17/9/017

## Description

### Domaine technique de l'invention

L'invention concerne le domaine de la caractérisation d'un rayonnement solaire, plus particulièrement de la détermination de l'intensité de la lumière directe et de l'intensité de la lumière diffuse qui composent le rayonnement solaire.

L'invention a pour objet plus particulièrement un procédé et un capteur utilisant le principe d'exposer un élément de blocage adapté pour masquer une partie du rayonnement solaire de sorte à former sur un support, en cas de présence de lumière directe, un motif ayant un contour présentant un contraste lumineux entre au moins une zone sombre et au moins une zone claire.

### État de la technique

La caractérisation d'un rayonnement solaire est une problématique récurrente dans de nombreux domaines de la vie courante. De manière connue, un rayonnement solaire se compose d'une lumière directe et/ou d'une lumière diffuse (ou encore appelée indirecte), dont les intensités relatives peuvent varier en fonction des conditions climatiques notamment. La lumière directe correspond à l'ensemble des rayons solaires qui proviennent directement du soleil, tandis que la lumière diffuse est formée par l'ensemble des rayons solaires qui ne proviennent pas directement du soleil. La lumière diffuse se présente comme le résultat du phénomène physique de la diffusion et réverbération du rayonnement solaire sur la voute céleste.

Dans la plupart des solutions connues pour réaliser la détection d'un rayonnement solaire, il n'est pratiqué aucun discernement entre la lumière directe et la lumière diffuse, de sorte que seuls des paramètres liés à la lumière globale du rayonnement solaire (i.e. composée par le cumul des lumières directe et diffuse) sont identifiés et éventuellement traités. À titre d'exemple, le document US-A-5455415 ou EP-A-1262747 divulguent des solutions où seuls l'angle d'incidence ou la puissance de la lumière globale est étudié afin de pouvoir équilibrer ou réguler le flux de la climatisation dans différentes parties d'un véhicule automobile en fonction de l'apport solaire lié au rayonnement solaire global. Le document WO2006/023540A1 divulgue une solution de mesure du rayonnement solaire global qui permet de quantifier l'accumulation de lumière sur un site particulier pour participer à la photosynthèse d'une plante. Les documents EP-A1-1160549 et EP-A1-0336152 traitent quant à eux de solutions où seule la composante du rayonnement solaire formée par la lumière directe est étudiée.

Dans de nombreuses applications, il apparaît toutefois utile, voire indispensable, de discerner la composante due à la lumière directe du rayonnement solaire de celle due à sa lumière diffuse.

À titre d'exemple, dans le domaine des huisseries, la conception et le fonctionnement de certaines fenêtres actives nécessitent une acquisition de ces deux paramètres afin de pouvoir contrôler l'apport solaire passant au travers du vitrage de la fenêtre et pénétrant dans le bâtiment. L'objet d'un tel contrôle automatique est notamment de prévenir un apport solaire trop grand pour éviter une élévation de température trop importante dans le bâtiment par rapport à une température souhaitée, par exemple en période estivale. Le contrôle automatique permet également d'éviter l'éblouissement des occupants par un apport de lumière directe trop important par rapport à la lumière ambiante ou diffuse. Il en résulte alors une amélioration du confort pour les occupants du bâtiment et éventuellement la suppression du recours à un système de climatisation pour réguler la température intérieure du bâtiment. Toutefois, un tel contrôle de l'apport solaire à travers une fenêtre active doit être réalisé sans pour autant limiter de manière outrancière l'apport lumineux afin de maintenir le niveau nécessaire de lumière pour les occupants à l'intérieur du bâtiment. Ces deux contraintes sensiblement contradictoires doivent être vérifiées autant que possible pour que le contrôle appliqué par la fenêtre active soit considéré comme agréable et performant.

Différentes études ont montré que l'impact de ces deux contraintes contradictoires peut être limité en traitant distinctement la partie du rayonnement solaire formée par la lumière directe qui représente un facteur d'élévation thermique et la partie complémentaire du rayonnement solaire formée par la lumière diffuse ou indirecte qui présente l'avantage de pouvoir éclairer l'intérieur du bâtiment sans engendrer un apport thermique important. C'est l'une des raisons de la nécessité de fournir une solution de caractérisation du rayonnement solaire qui permet de déterminer l'intensité de la lumière directe et l'intensité de la lumière diffuse.

Des solutions connues présentent l'inconvénient d'être encombrants et de nécessiter un réglage quotidien en fonction notamment de l'azimut du soleil.

Dans le domaine de la commande d'éolienne, ie document WO2009/030252A1 divulgue un système d'évaluation du rayonnement solaire comprenant un premier capteur de mesure orienté vers l'est et un deuxième capteur de mesure orienté vers l'ouest. L'un des premier et deuxième capteurs de mesure réalise l'acquisition de l'intensité d'une première lumière et l'autre capteur de mesure réalise l'acquisition d'une deuxième lumière. Puis une comparaison est exécutée entre les intensités des première et deuxième lumières, afin de commander en fonction du résultat de cette comparaison la mise hors service éventuelle de l'éolienne. Cette solution présente une souplesse d'utilisation discutable car elle réclame une exigence stricte dans l'orientation des capteurs, dont le nombre par ailleurs doit obligatoirement être supérieur ou égal à deux.

Une deuxième solution est décrite dans le document EP-B1-1012633 qui divulgue un système comprenant au moins deux détecteurs réagissant à la lumière et un élément de masquage. Ce dernier présente un motif de zones translucides et opaques qui sont disposées pour assurer que dans n'importe quelle inclinaison solaire et n'importe quelle position solaire diurne, au moins un détecteur peut être situé dans une zone claire du motif contrasté formé sur un support afin de mesurer la lumière globale qui traverse la zone translucide correspondante, et au moins un détecteur peut être situé dans une zone sombre du motif formé sur le support afin de mesurer la lumière diffuse. En effet, ce dernier capteur est protégé contre la lumière directe par une zone opaque correspondante. L'élément de masquage est tel qu'en cours d'utilisation, au moins deux détecteurs précités reçoivent des quantités sensiblement égales de lumière diffuse. Cette solution, bien que non limitative en terme d'orientation du système, présente également une exigence quant au nombre de détecteurs utilisés qui doit obligatoirement être supérieur ou égal à deux. D'autre part, cette solution est complexe de conception et de structure, la rendant de surcroit encombrante. En outre, l'inconvénient essentiel réside dans l'imprécision du résultat de la mesure de l'intensité de la lumière diffuse, qui résulte notamment de l'influence de la présence nombreuse et encombrante des zones opaques. En effet, la lumière diffuse est constituée en théorie par l'ensemble des rayonnements solaires qui ne proviennent pas directement du soleil. Or de telles zones opaques protègent le détecteur qui a pour rôle de mesurer la lumière diffuse d'une partie non négligeable des rayonnements solaires constitutifs de la lumière diffuse. Autrement dit, en raison de l'angle solide intercepté cumulativement par les zones opaques par rapport à ce détecteur, seule une partie de la lumière diffuse réelle est mesurée par le détecteur car la partie restante de lumière diffuse est bloquée par les zones opaques. Il en résulte une réelle imprécision du résultat de la mesure de l'intensité de la lumière diffuse. Enfin, cette solution est uniquement dédiée à la discrimination des temps ensoleillé ou couvert ou à la détermination de la position du soleil.

### Objet de l'invention

Le but de la présente invention est de remédier à ces inconvénients, en proposant une solution de caractérisation d'un rayonnement solaire qui permette de conserver une souplesse de mise en oeuvre, tout en améliorant la précision des résultats ainsi que l'encombrement et la complexité de la structure utilisée, et qui supprime toute restriction quant au nombre de détecteurs.

Un premier aspect de l'invention concerne un procédé de détermination de l'intensité d'une lumière directe et de l'intensité d'une lumière diffuse d'un rayonnement solaire, selon la revendication 1.

De préférence, la première étape s'accompagne de la formation, par l'élément de blocage, d'un faisceau lumineux constitué exclusivement par de la lumière directe et dirigé vers le support.

Avantageusement, la détermination de l'intensité du premier type de lumière comprend une mesure de l'intensité de la lumière directe dans un secteur sensiblement au centre du motif constitué par la zone claire.

De préférence, la première étape s'accompagne de la projection d'une ombre, par l'élément de blocage, sur le support.

Avantageusement, la détermination de l'intensité du premier type de lumière comprend une mesure de l'intensité de la lumière diffuse dans un secteur sensiblement au centre du motif constitué par la zone sombre constitutive de l'ombre.

L'invention concerne un procédé de fonctionnement d'une fenêtre active, comprenant une étape de mise en oeuvre du procédé de détermination de l'intensité de la lumière directe et de l'intensité de la lumière diffuse tel que défini ci-dessus et une étape de définition d'un coefficient de transmission du rayonnement au travers de la fenêtre active en fonction de l'intensité de la lumière directe et de l'intensité de la lumière diffuse.

Un deuxième aspect de l'invention concerne un capteur d'un rayonnement solaire, comprenant un élément de blocage d'une partie du rayonnement solaire configuré de sorte à former sur un support, en cas de présence d'une lumière directe, un motif ayant un contour présentant un contraste lumineux entre au moins une zone sombre et au moins une zone claire. Ce capteur est remarquable en ce qu'il comporte un dispositif de contrôle déterminant l'intensité d'une lumière globale et l'intensité d'un premier type de lumière choisi parmi la lumière directe et une lumière diffuse, et un élément de détermination de l'intensité d'un deuxième type de lumière, correspondant respectivement à la lumière diffuse ou à la lumière directe en fonction du choix du premier type de lumière, l'élément de détermination utilisant l'intensité de la lumière globale et l'intensité du premier type de lumière pour déterminer l'intensité du deuxième type de lumière.

De préférence, le dispositif de contrôle comprend au moins un détecteur adapté pour réaliser une prise de mesures, notamment une prise de mesures successives, de l'intensité de lumière en des points de mesure du support répartis entre le centre et le pourtour du support.

Selon un mode de développement, l'élément de blocage comporte un couvercle opaque au droit du support notamment adoptant une forme plane, le couvercle étant pourvu d'une ouverture permettant le passage du faisceau lumineux en direction du support.

Selon un mode de développement, l'élément de blocage comporte un mât sensiblement perpendiculaire au support, notamment adoptant une forme plane.

De préférence, le dispositif de contrôle comprend un détecteur adapté pour mesurer l'intensité de la lumière globale correspondant à la somme de l'intensité de la lumière directe et de l'intensité de la lumière diffuse

Dans un troisième aspect, l'invention porte également sur une fenêtre active comportant un tel capteur pour assurer une surveillance de l'apport solaire d'un rayonnement solaire passant au travers de la fenêtre. Ladite fenêtre comprend un système de surveillance recevant des signaux de sortie provenant du dispositif de contrôle du capteur représentatifs de l'intensité de la lumière directe et de l'intensité de la lumière diffuse, le système de surveillance étant apte à commander, en fonction des signaux de sortie, l'exécution d'opérations de pilotage d'organes de la fenêtre pour varier le flux du rayonnement solaire traversant.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 illustre un premier mode de réalisation d'un capteur selon le deuxième aspect de l'invention,
- la figure 2 illustre un deuxième mode de réalisation d'un capteur selon le deuxième aspect de l'invention,
- la figure 3 est une représentation schématique du principe de détermination de l'intensité du premier type de lumière dans le cas du premier mode de réalisation de la figure 1,
- la figure 4 représente schématiquement le principe de détermination de l'intensité du premier type de lumière dans le cas du deuxième mode de réalisation de la figure 2,
- la figure 5 schématise l'agencement d'une fenêtre active selon le troisième aspect de l'invention.

### Description de modes préférentiels de l'invention

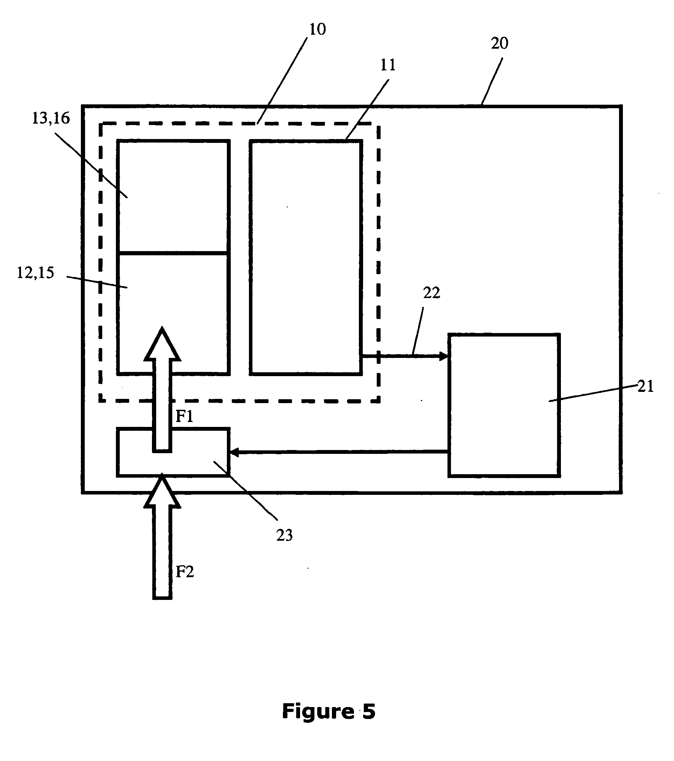

Globalement, la solution selon l'invention de caractérisation d'un rayonnement solaire (repéré par la flèche F1 sur la figure 5), que ce soit par le biais du procédé ou par le biais du capteur 10 adapté pour mettre en oeuvre ce procédé, permet la détermination de l'intensité d'une lumière directe et de l'intensité d'une lumière diffuse du rayonnement solaire F1.

Le rayonnement solaire F1 incident sur le capteur 10 se compose classiquement d'une lumière directe et/ou d'une lumière diffuse (ou encore appelée lumière indirecte), dont les intensités respectives peuvent varier en fonction des conditions climatiques notamment. La lumière directe correspond à l'ensemble des rayons solaires qui proviennent directement du soleil, tandis que la lumière diffuse est formée par l'ensemble des rayons solaires auxquels ie capteur réagit mais qui pourtant ne proviennent pas directement du soleil. La lumière diffuse est le résultat du phénomène physique de la diffusion du rayonnement solaire. Par conséquent, la lumière globale du rayonnement solaire F1 est constituée par le cumul de la lumière directe et de la lumière diffuse.

La détection consiste à exposer au rayonnement solaire F1 un élément de blocage (expliqué en détail ci-après) configuré de sorte à bloquer ou masquer une partie du rayonnement solaire F1 et à former sur un support (expliqué en détail ci-après), en cas de présence de lumière directe, un motif (expliqué en détail ci-après) ayant un contour présentant un contraste lumineux entre au moins une zone sombre et au moins une zone claire.

Puis, la détection du rayonnement solaire F1 comporte une détermination de l'intensité de la lumière globale et une détermination de l'intensité d'un premier type de lumière choisi parmi la lumière directe et la lumière diffuse.

Ensuite, la détection consiste à utiliser l'intensité de la lumière globale et l'intensité du premier type de lumière ainsi déterminées au préalable, pour déterminer l'intensité d'un deuxième type de lumière, correspondant respectivement à la lumière diffuse ou à la lumière directe en fonction du choix du premier type de lumière. Autrement dit, dans le cas où le premier type de lumière est la lumière diffuse, le deuxième type de lumière est constitué par la lumière directe. Inversement, le deuxième type de lumière est de la lumière diffuse dans le cas où le premier type de lumière est constitué par la lumière directe. La détermination de l'intensité du deuxième type de lumière peut résulter d'une comparaison entre l'intensité de la lumière globale et l'intensité du premier type de lumière. Cette comparaison peut par exemple consister en une opération de soustraction.

Facultativement, la caractérisation peut ensuite comporter une étape consistant à déterminer le rapport entre l'intensité du premier type de lumière et l'intensité du deuxième type de lumière.

Selon un mode particulier de l'invention, la détermination de l'intensité du premier type de lumière peut comprendre une utilisation d'un gradient de lumière entre la zone sombre et la zone claire au niveau du contour du motif formé lors de l'exposition au rayonnement solaire F1 de l'élément de blocage. Cette utilisation peut consister à évaluer le gradient de lumière entre ces zones claire et sombre afin de caractériser le motif formé. Une telle caractérisation du motif par une évaluation du gradient de lumière sur son contour donne accès directement à une confirmation de la présence ou de l'absence du motif, et en cas de présence, à une évaluation de la forme, de la taille et de l'emplacement du motif, car ces paramètres dépendent de la composition du rayonnement solaire F1 utilisé au cours de l'exposition. De plus, un gradient de lumière correspondant à une absence de motif traduit une part de lumière directe très faible voire nulle. Au contraire, un gradient de lumière correspondant à un motif dont le contour présente un contraste très élevé (le contour étant donc très précis, franc et net) traduit une part de lumière directe élevée. Enfin, un gradient de lumière correspondant à un motif dont le contour présente un contraste moins élevé (le contour devenant moins précis et sensiblement plus flou) signifie la présence d'une part de lumière diffuse plus ou moins importante.

Le gradient de lumière correspond à une variation de luminosité dans l'espace, dans le cas présent à la zone de raccordement le long du support entre la zone claire et la zone sombre, cette zone de raccordement étant constitutive du contour du motif formé lors de l'exposition au rayonnement solaire F1 de l'élément de blocage.

Généralement, le gradient de lumière évolue dans le même sens que le rapport entre l'intensité de la lumière directe et l'intensité de la lumière diffuse. En effet, ce rapport a tendance à croitre en cas d'augmentation de l'intensité de lumière directe et/ou en cas de diminution de l'intensité de lumière diffuse, ce qui s'accompagne alors d'une augmentation évidente du contraste lumineux au contour du motif et concomitamment du gradient de lumière. Un raisonnement inverse s'applique mutatis mutandis pour une diminution du gradient de lumière dans le cas d'une baisse du rapport entre les intensités des lumières directe et diffuse.

La caractérisation du motif par une évaluation du gradient de lumière sur son contour à chaque nouvelle application permet avantageusement de s'affranchir de l'obligation de réglage récurrent du capteur 10, le rendant également bien moins encombrant potentiellement. Dans le cas où un seul et unique détecteur peut accomplir la mesure de l'intensité de la lumière globale et la mesure de l'intensité du premier type de lumière (directe ou diffuse), le capteur 10 peut alors présenter l'avantage de ne comporter qu'un seul détecteur sensible à la lumière.

Avantageusement, afin de parvenir à la détermination de l'intensité globale du rayonnement solaire F1 (correspondant à la somme de l'intensité de la lumière directe et de l'intensité de la lumière diffuse), le capteur 10 peut incorporer un détecteur adapté pour mesurer l'intensité globale du rayonnement solaire F1 incident sur le capteur.

L'utilisation du gradient de lumière peut comprendre, comme expliqué ci-après, une prise de mesures successives de l'intensité de lumière incidente sur le support en des points de mesure du support répartis entre son centre et son pourtour. À cet effet, le dispositif de contrôle 11 qui équipe le capteur 10 et qui est conçu pour accomplir les opérations de détermination de l'intensité de la lumière globale et de l'intensité du premier type de lumière, peut comprendre au moins un détecteur réagissant à la lumière et qui soit adapté pour la réalisation d'une telle prise de mesure en des points répartis du support, cette mesure pouvant par exemple être opérée de manière successive. Le capteur 10 peut, en outre, comporter un élément de détermination de l'intensité du deuxième type de lumière, correspondant respectivement à la lumière diffuse ou à la lumière directe en fonction du choix du premier type de lumière, cet élément de détermination, intégré ou non au dispositif 11, utilisant l'intensité de la lumière globale et l'intensité du premier type de lumière pour déterminer l'intensité du deuxième type de lumière.

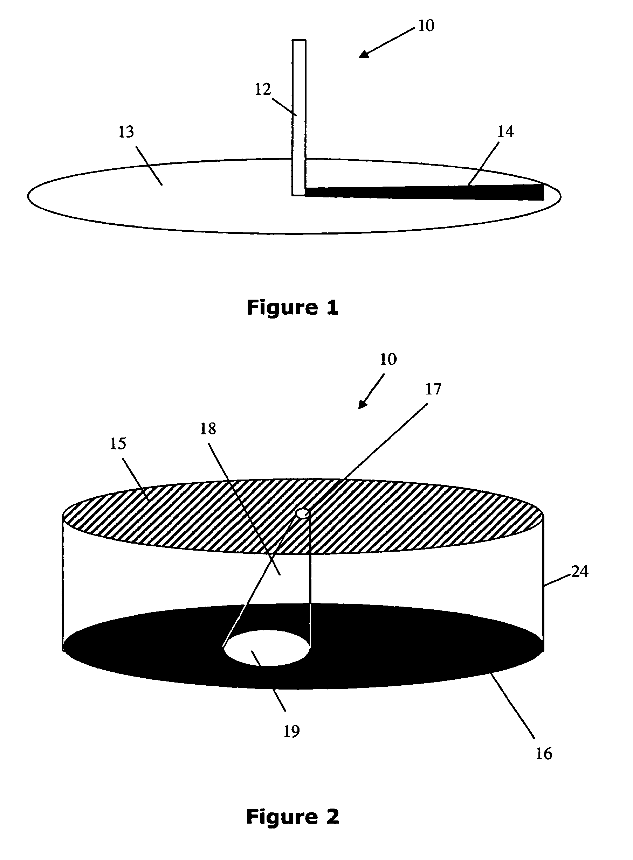

Les figures 1 et 2 illustrent respectivement des premier et deuxième modes de réalisation d'un capteur 10 selon le deuxième aspect de l'invention. Chaque mode de réalisation permet la mise en oeuvre du procédé objet du premier aspect de l'invention.

Dans le premier mode de réalisation correspondant à la figure 1, l'élément de blocage, qui confère la fonction de masquage partiel vis-à-vis du rayonnement solaire F1 incident sur le capteur 10 afin de former le motif à contour contrasté, comporte un mât 12 sensiblement perpendiculaire au support 13 qui peut notamment adopter une forme plane. Le mât 12 sera avantageusement incliné si le capteur 10 est placé horizontalement afin d'éviter d'avoir un rayonnement solaire direct normal au mât qui aurait pour incidence de ne pas générer une ombre. Dans ce mode de réalisation de capteur 10, l'exposition du mât 12 constitutif de l'élément de blocage au rayonnement solaire F1 s'accompagne de la projection d'une ombre, par le mât 12, sur le support 13. Cette ombre repérée 14 n'est visible qu'en cas de présence d'une lumière directe et se présente sous une forme générale globalement trapézoïdale, cette forme étant directement fonction de la forme du mât 12. Pour sa part, l'ombre 14 est constituée par de la lumière diffuse exclusivement. Ainsi, la détermination de l'intensité du premier type de lumière, qui ici est la lumière diffuse, comprend une mesure de l'intensité de la lumière diffuse dans un secteur sensiblement au centre de l'ombre 14, c'est-à-dire au centre du motif constitué par la zone sombre constitutive de l'ombre 14. La zone claire formant le contraste lumineux au contour du motif est constituée par les parties du support 13 qui ne sont pas protégées par le mât 12. Le deuxième type de lumière est ici constitué par la lumière directe.

Le mât 12 est un générateur de l'ombre 14. Le support 13 peut être constitué par un détecteur réagissant à la lumière. À titre d'exemple, il peut s'agir d'un détecteur muni d'une pluralité de pixels simples ou pouvant être couvert de photodiodes (à la manière des cellules photovoltaïques). D'autres technologies permettant la détection de lumière dans le spectre visible peuvent être envisagées.

Dans ce cas, un seul et unique détecteur accomplit la mesure de l'intensité de la lumière globale et la mesure de l'intensité de la lumière diffuse. Le capteur 10 présente alors l'avantage de ne comporter qu'un seul détecteur sensible à la lumière.

Dès lors que la lumière directe est suffisamment importante, le mât 12 génère une ombre 14 présentant des contours nets avec des gradients de lumière entre zones claire et sombre importants au niveau des pixels adjacents du détecteur. Par contre, si la lumière directe est moins importante et/ou si la lumière diffuse prend une proportion plus importante, l'ombre 14 sera très faible ou inexistante et le gradient de lumière sera très faible voire nulle.

Comme évoqué précédemment, l'éclairement résiduel au niveau de l'ombre 14 correspond à l'apport de la lumière diffuse. L'ombre évolue de façon circulaire durant la journée. L'ombre 14 s'étend plus ou moins sur le support 13 selon l'azimut du soleil et la hauteur du mât 12. L'ombre 14 peut donc rester inscrite à l'intérieur du pourtour du support 13 ou bien en déborder.

Il est à noter que ce capteur 10 peut être installé avantageusement selon une orientation quelconque, par exemple verticalement ou horizontalement. La forme du mât 12, par exemple sa section dans le cas d'un élément en forme de révolution, peuvent être quelconques, de même que la hauteur du mât ou la forme (et éventuellement son diamètre dans le cas d'une forme circulaire) du support 13.

Dans le deuxième mode de réalisation de capteur 10 visible sur la figure 2, l'élément de blocage, qui confère la fonction de masquage partiel vis-à-vis du rayonnement solaire F1 incident sur le capteur 10 afin de former le motif à contour contrasté, comporte un couvercle opaque 15 au droit du support 16 qui peut notamment adopter une forme plane. Le couvercle 15 est pourvu d'une ouverture 17, le couvercle 15 et l'ouverture 17 étant configurées de sorte à permettre le passage d'un faisceau lumineux 18 en direction du support 16 qui soit constitué exclusivement par de la lumière directe. Dans ce mode de réalisation de capteur 10, l'exposition du couvercle 15 pourvu de son ouverture 17, constitutif de l'élément de blocage au rayonnement solaire F1, s'accompagne de la formation, par l'élément de blocage, de ce faisceau lumineux 18 dirigé vers le support 16. Ainsi, la détermination de l'intensité du premier type de lumière, qui dans ce cas est la lumière directe, comprend une mesure de l'intensité de la lumière directe dans un secteur sensiblement au centre de la tache lumineuse 19 formée à l'intersection du faisceau lumineux 18 avec le support 16, c'est-à-dire au centre du motif constitué par la zone claire constitutive de la tâche lumineuse. La zone sombre formant le contraste lumineux au contour du motif est constituée par les parties du support 16 qui ne sont pas éclairées par le faisceau lumineux 18. Le deuxième type de lumière correspond alors à la lumière diffuse.

Le capteur 10 peut adopter la forme d'une boite noire grâce à l'aménagement de parois latérales 24 opaques pour raccorder le pourtour du couvercle 15 et le pourtour du support 16. L'ouverture 17 est disposée à l'aplomb du support 16. À titre d'exemple non exclusif, la forme de l'ouverture 17 est circulaire. L'espace intérieur délimité par le support 16, le couvercle 15 et les parois latérales 24 est un volume noir (à l'exception du faisceau lumineux 18) pour éviter toute réflexion incidente pouvant produire des perturbations et générer des erreurs de mesure de l'intensité de la lumière globale et/ou de l'intensité de la lumière directe au niveau de la tache 19. La hauteur séparant le couvercle 15 et le support 16 doit être suffisamment importante et les dimensions de l'ouverture 17 suffisamment petites pour que l'éclairement diffus provenant de l'extérieur du capteur 10 ne puisse venir illuminer le détecteur de mesure aménagé au niveau du support 16. À titre d'exemple, l'ouverture 17 présente des dimensions de l'ordre d'une tête d'épingle, de l'ordre de 1 mm, voire 2 mm, voire 3 mm environ.

Le capteur 10 de la figure 2 peut en outre incorporer un détecteur adapté pour mesurer l'intensité globale du rayonnement solaire F1 incident sur le capteur. Ce détecteur, distinct de celui affecté à la détermination de l'intensité de la lumière directe, peut par exemple équiper le couvercle 15.

Dès lors que la lumière directe est suffisamment importante, l'ouverture 17 génère une tache 19 présentant des contours nets avec des gradients de lumière entre zones claire et sombre importants au niveau des pixels adjacents du détecteur agencé au niveau du support 16 qui est par exemple du même type que celui utilisé dans le premier mode de réalisation de la figure 1. Par contre, si la lumière directe est moins importante et/ou si le rayonnement solaire F1 est essentiellement composé de lumière diffuse, le faisceau 18 entre à peine dans le capteur et n'atteint pas le détecteur, de sorte que la tache 19 sera très faible ou inexistante et que le gradient de lumière entre pixels adjacents sera très petit voire nulle.

Il est à noter que les capteurs 10 des figures 1 et 2 peuvent être installés avantageusement selon une orientation quelconque, par exemple verticalement ou horizontalement.

La répartition des points de mesure du détecteur qui équipe le dispositif de contrôle 11 afin d'assurer la détermination de l'intensité du premier type de lumière peuvent être répartis uniformément ou non et de sorte à réaliser une mesure progressive entre le centre et le pourtour du support 13 ou 16.

Comme évoqué précédemment, les valeurs d'intensité des lumières directe et diffuse peuvent être déterminées par une évaluation du gradient de lumière au contour du motif. La prise en compte de la forme et du gradient ainsi que leur recoupement peut encore améliorer la fiabilité de la solution de détection selon l'invention, en permettant de retirer les points de mesure aberrants.

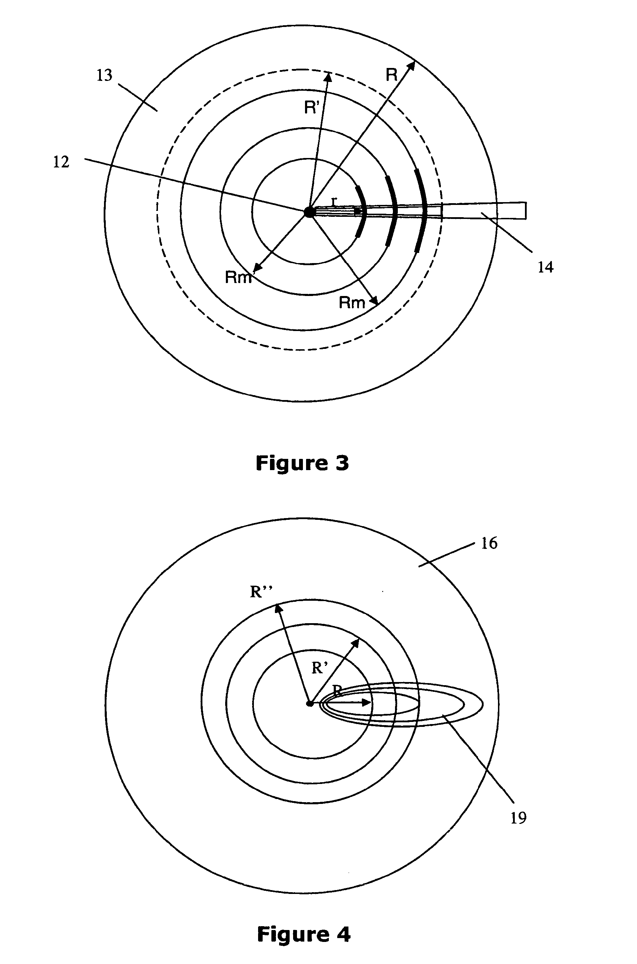

La figure 3 représente schématiquement un principe de détermination de l'intensité de la lumière diffuse au niveau de l'ombre 14 dans le cas du premier mode de réalisation de la figure 1.

Dans un premier temps, il convient de caractériser l'ombre 14 en utilisant le gradient de lumière, afin de déterminer avec pertinence la taille, la forme, l'emplacement de l'ombre 14. La zone de capture de l'ombre 14 n'est pas forcément la zone la plus sombre qui se situe immédiatement à proximité du pied du mât 12 car cette zone la plus sombre est justement dépourvue d'ensoleillement diffus provenant de la direction du mât 12. Pour la caractérisation de l'ombre, il convient au contraire d'éliminer des mesures la zone la plus sombre. En pratique, un critère de sélection peut être appliqué, par exemple en ne conservant les mesures des points du support 13 situé à une distance r comptée par rapport au pied du mât 12 qui soit supérieure à un seuil prédéterminé. Ce seuil prédéterminé est par exemple égal au produit du diamètre du mât par un coefficient multiplicateur, par exemple de l'ordre de 10. Puis une cartographie de la valeur de lumière point par point est réalisée au cours d'une prise de mesure par le détecteur, celui-ci comprenant des points de mesure répartis de sorte à réaliser une mesure progressive entre le cercle de rayon r et le pourtour du support 13 par exemple situé à un rayon R du mât 12 dans le cas d'un pourtour circulaire.

Dans un deuxième temps, il convient de mesurer l'intensité de la lumière diffuse à partir de l'ombre 14 ainsi caractérisée. Deux cas peuvent se présenter: soit l'ombre 14 s'étend au-delà du pourtour du support 13, c'est-à-dire à une distance par rapport au mât 12 supérieure à R, soit l'ombre reste inscrite à une distance R' inscrite dans le support, R' étant donc inférieure à R.

Dans le premier cas, il devra être vérifié que les dimensions du support 13 sont suffisamment grandes devant les dimensions de la section du mât 12 pour pouvoir trouver, au sein de l'ombre 14, une zone de luminosité homogène. Généralement, la mesure de l'intensité de la lumière diffuse pourra être réalisée le long d'un arc centré autour du mât 12 à une distance Rm par rapport à celui-ci qui soit égal à (R+r)/2. La mesure de l'intensité de la lumière diffuse est alors appliquée au milieu de la longueur de cet arc, ce qui correspond au point d'intersection entre l'arc et l'axe médian de l'ombre 14.

Dans le deuxième cas par contre, la distance R' comptée par rapport au mât à partir de laquelle une équi-luminescence (correspondant à la lumière globale) est prise comme référence pour la mesure. En effet, la mesure de l'intensité de la lumière diffuse pourra être réalisée le long d'un arc centré autour du mât 12 à une distance Rm' par rapport à celui-ci qui soit égal à (R'+r)/2. La mesure de l'intensité de la lumière diffuse est alors appliquée au milieu de la longueur de cet arc, ce qui correspond au point d'intersection entre l'arc et l'axe médian de l'ombre 14.

La figure 4 représente schématiquement un principe de détermination de l'intensité de la lumière directe au niveau de la tache 19 dans le cas du deuxième mode de réalisation de la figure 2.

Classiquement, la tâche 19 présente une forme circulaire ou pour le moins elliptique. Dans le cas d'une lumière directe de forte intensité, la mesure de l'intensité de la lumière directe est pratiquée en relevant la valeur de la mesure en un point au centre de la tache 19.

Par contre dans le cas d'un ensoleillement direct insuffisant pour une telle détermination, il convient de caractériser la tache 19 en utilisant le gradient de lumière, afin de déterminer avec pertinence la taille, la forme, l'emplacement de la tache 19. Une cartographie de la valeur de lumière point par point au niveau du support 16 est réalisée au cours d'une prise de mesure par le détecteur correspondant, celui-ci comprenant des points de mesure répartis de sorte à réaliser une mesure progressive entre le centre du support 16 et son pourtour. Par exemple, un relevé de mesures est réalisé successivement pour des points situé sur une pluralité de cercles concentriques, par exemple progressivement du centre du support 16 en allant vers son pourtour. En référence à la figure 4, un premier relevé de mesures est réalisé pour un ensemble de points de mesure répartis le long d'un même cercle de rayon R centré autour du centre du support 16, puis cette opération est répétée pour des cercles ayant des rayons progressivement croissants, par exemple de valeur R' puis R" sur la figure 4.

Il convient ensuite de mesurer l'intensité de la lumière directe à partir de la tache 19 ainsi caractérisée. Une première solution consiste à relever le point de mesure situé au centre de la tache 19 qui peut présenter différentes formes elliptiques comme l'illustre la figure 4, en fonction du rayonnement solaire. Une autre solution consiste à utiliser la cartographie précédemment établie et déterminer le point de mesure où la valeur relevée est la plus grande, puis à conserver cette mesure et l'affecter à l'intensité de la lumière directe.

Les solutions de caractérisation d'un rayonnement solaire décrites ci-dessus conduisent à une précision de la détermination de l'intensité de la lumière diffuse nettement supérieure à l'art antérieur. En effet, dans les deux modes de réalisation décrits précédemment, cette détermination est réalisée à partir d'un faisceau de lumière diffuse présentant un angle solide très élevé, tout juste inférieur à 2π stéradian, par exemple supérieur à une valeur de l'ordre de 1,7π stéradian, voire 1,8π stéradian ou 1,9π stéradian. Dans le cas d'utilisation du capteur pour la commande d'une fenêtre ou d'un vitrage actif, il est intéressant de faire au mieux coïncider l'angle solide vu depuis un point de la surface extérieure du vitrage à l'angle solide permettant au capteur de déterminer l'intensité de la lumière diffuse. En d'autres termes, on positionne le capteur de sorte que le support 13 ou le couvercle 15 soit parallèle au vitrage ou sensiblement parallèle au vitrage. En d'autres termes encore, on positionne le capteur de sorte que la surface permettant de déterminer l'intensité de la lumière directe et/ou de déterminer l'intensité de la lumière diffuse et/ou de déterminer l'intensité de la lumière globale soit parallèle au vitrage ou sensiblement parallèle au vitrage.

En référence à la figure 5, une fenêtre active ou un vitrage actif 20 assurant une surveillance de l'apport solaire d'un rayonnement solaire passant au travers du vitrage de la fenêtre, peut comprendre un capteur 10 précédemment décrit couplé à un système de surveillance 21 recevant des signaux de sortie 22 provenant du dispositif de contrôle 11 du capteur 10. Ces signaux 22 peuvent être représentatifs de l'intensité de la lumière directe et de l'intensité de la lumière diffuse déterminées préalablement par le capteur 10, le système de surveillance 21 étant apte à commander, en fonction des signaux de sortie 22 reçus, l'exécution d'opérations de pilotage d'organes 23 de la fenêtre 20 pour varier le flux du rayonnement solaire traversant ou pour faire varier le coefficient de transmission du rayonnement au travers de la fenêtre active. Autrement dit, le pilotage des organes 23 par le système de surveillance 21 permet de moduler le flux du rayonnement solaire traversant le vitrage de la fenêtre, par exemple en régulant la résistance à la traversée du vitrage de la fenêtre par le rayonnement solaire. Ainsi, les organes 23 de la fenêtre permettent que le rayonnement solaire F1 qui est incident sur le capteur10 intégré à la fenêtre puisse être modifié (en variant son intensité globale et/ou la part relative de lumière directe versus lumière diffuse) par rapport au rayonnement solaire F2 disponible avant action des organes 23.

Le contrôle de l'apport solaire à travers la fenêtre active 20 opéré par le système de surveillance 21 afin de réguler l'apport thermique doit être réalisé sans pour autant limiter de manière outrancière l'apport lumineux afin de maintenir le niveau nécessaire de lumière pour les occupants à l'intérieur du bâtiment. Ces deux contraintes sensiblement contradictoires doivent être prises en compte autant que possible pour le contrôle effectué par le système 21 pour que ce contrôle soit agréable et performant.

Par fenêtre active ou vitrage actif, on entend toute fenêtre ou tout vitrage dont le coefficient de transmission du rayonnement peut être modifié. A titre d'exemple, le coefficient de transmission peut être modifié par un rideau, volet orientable ou une toile.

## Revendications

1. Procédé de détermination de l'intensité d'une lumière directe et de l'intensité d'une lumière diffuse d'un rayonnement solaire (F1), comprenant une première étape consistant à exposer au rayonnement solaire un élément de blocage (12, 15, 17) d'une partie dudit rayonnement configuré de sorte à former sur un support (13, 16), qui en cas de présence de lumière directe, un motif (14, 19) ayant un contour présentant un contraste lumineux entre au moins une zone sombre et au moins une zone claire, **caractérisé en ce qu'**il comporte :
- une deuxième étape de détermination de l'intensité de la lumière globale et de détermination de l'intensité d'un premier type de lumière choisi parmi la lumière directe et la lumière diffuse,
- la détermination de l'intensité du premier type de lumière comprenant une utilisation d'un gradient de lumière entre la zone sombre et la zone claire au niveau du contour du motif (14, 19) formé lors de l'exposition au rayonnement solaire (F1) de l'élément de blocage (12, 15, 17), et l'utilisation du gradient de lumière comprenant une prise de mesures successives de l'intensité de lumière incidente sur le support en des points de mesure du support répartis entre son centre et son pourtour.
- une troisième étape d'utilisation de l'intensité de la lumière globale et de l'intensité du premier type de lumière pour déterminer l'intensité d'un deuxième type de lumière, correspondant respectivement à la lumière diffuse ou à la lumière directe en fonction du choix du premier type de lumière.

2. Procédé selon la revendication 1, **caractérisé en ce que** la première étape s'accompagne de la formation, par l'élément de blocage, d'un faisceau lumineux constitué exclusivement par de la lumière directe et dirigé vers le support.

3. Procédé selon la revendication 2, **caractérisé en ce que** la détermination de l'intensité du premier type de lumière comprend une mesure de l'intensité de la lumière directe dans un secteur sensiblement au centre du motif constitué par la zone claire.

4. Procédé selon l'une des revendications 1 à 3, **caractérisé en ce que** la première étape s'accompagne de la projection d'une ombre, par l'élément de blocage, sur le support.

5. Procédé selon la revendication 4, **caractérisé en ce que** la détermination de l'intensité du premier type de lumière comprend une mesure de l'intensité de la lumière diffuse dans un secteur sensiblement au centre du motif constitué par la zone sombre constitutive de l'ombre.

6. Procédé de fonctionnement d'une fenêtre active, comprenant une étape de mise en oeuvre du procédé de détermination de l'intensité de la lumière directe et de l'intensité de la lumière diffuse selon l'une des revendications précédentes et une étape de définition d'un coefficient de transmission du rayonnement au travers de la fenêtre active en fonction de l'intensité de la lumière directe et de l'intensité de la lumière diffuse.

7. Capteur (10) d'un rayonnement solaire, comprenant un élément de blocage d'une partie du rayonnement solaire configuré de sorte à former sur un support, en cas de présence d'une lumière directe, un motif ayant un contour présentant un contraste lumineux entre au moins une zone sombre et au moins une zone claire, **caractérisé en ce qu'**il comporte :
- un dispositif de contrôle (11) déterminant l'intensité d'une lumière globale et l'intensité d'un premier type de lumière choisi parmi la lumière directe et une lumière diffuse en utilisant un gradient de lumière entre la zone sombre et la zone claire au niveau du contour du motif, ledit dispositif de contrôle comprenant au moins un détecteur adapté pour réaliser une prise de mesures successives, de l'intensité de lumière en des points de mesure du support répartis entre le centre et le pourtour du support ; et
- un élément de détermination de l'intensité d'un deuxième type de lumière, correspondant respectivement à la lumière diffuse ou à la lumière directe en fonction du choix du premier type de lumière,l'élément de détermination utilisant l'intensité de la lumière globale et l'intensité du premier type de lumière pour déterminer l'intensité du deuxième type de lumière.

8. Capteur selon la revendication 7, **caractérisé en ce que** l'élément de blocage comporte un couvercle opaque (15) au droit du support (16) notamment adoptant une forme plane, le couvercle étant pourvu d'une ouverture (17) permettant le passage du faisceau lumineux (18) en direction du support.

9. Capteur selon la revendication 7, **caractérisé en ce que** l'élément de blocage comporte un mât (12) sensiblement perpendiculaire au support (13), notamment adoptant une forme plane.

10. Capteur selon l'une des revendications 7 à 9, **caractérisé en ce que** le dispositif de contrôle comprend un détecteur adapté pour mesurer l'intensité de la lumière globale correspondant à la somme de l'intensité de la lumière directe et de l'intensité de la lumière diffuse.

11. Fenêtre active (20) assurant une surveillance de l'apport solaire d'un rayonnement solaire passant au travers de la fenêtre, comprenant un capteur selon l'une des revendications 7 à 11 et un système de surveillance (21) recevant des signaux de sortie (22) provenant du dispositif de contrôle (11) du capteur (10) représentatifs de l'intensité de la lumière directe et de l'intensité de la lumière diffuse, le système de surveillance étant apte à commander, en fonction des signaux de sortie, l'exécution d'opérations de pilotage d'organes (23) de la fenêtre pour varier le flux du rayonnement solaire traversant.

## Patentansprüche

1. Verfahren zur Bestimmung der Stärke des direkten Lichts und des diffusen Lichts einer Sonnenstrahlung (F1), das einen ersten Schritt umfasst, in dem ein Teil der genannten Sonnenstrahlung durch ein Abdeckelement (12, 15, 17) abgeschirmt wird, welches Element so ausgelegt ist, dass es auf einem Träger (13, 16) ein Muster (14, 19) erzeugt, das bei Vorhandensein von direktem Licht eine Umrisslinie mit einem Helligkeitskontrast zwischen mindestens einer Dunkelzone und mindestens einer Hellzone aufweist, **dadurch gekennzeichnet, dass** das Verfahren
- einen zweiten Schritt zur Bestimmung der Stärke der Gesamtlichtstrahlung sowie zur Bestimmung der Stärke eines ersten Lichttyps, der wahlweise direktes Licht oder diffuses Licht sein kann,
- wobei die Bestimmung der Stärke des ersten Lichttyps die Verwendung eines Lichtgradienten zwischen der Dunkelzone und der Hellzone, an der Umrisslinie des bei Auftreffen der Sonnenstrahlung (F1) auf das Abdeckelement (12, 15, 17) erzeugten Musters (14, 19) umfasst und die Verwendung des Lichtgradienten die Erfassung mehrerer aufeinander folgender Messwerte der Stärke des auf den Träger treffenden Lichts an mehreren, zwischen der Mitte und dem Außenrand des Trägers verteilten Messpunkten umfasst,
- sowie einen dritten Schritt umfasst, der darin besteht, die Stärke der Gesamtlichtstrahlung sowie die Stärke des ersten Lichttyps zu verwenden, um die Stärke des zweiten Lichttyps zu bestimmen, der je nach Auswahl der ersten Lichttyps dem diffusen Licht oder dem direkten Licht entspricht.

2. Verfahren nach Anspruch 1, **dadurch gekennzeichnet, dass** im ersten Schritt mithilfe eines Abdeckelements ein Lichtstrahl erzeugt wird, der ausschließlich aus direktem Licht besteht und auf den Träger gelenkt wird.

3. Verfahren nach Anspruch 2, **dadurch gekennzeichnet, dass** die Bestimmung der Stärke des ersten Lichttyps eine Messung der Stärke des direkten Lichts in einem Bereich umfasst, der annähernd in der Mitte des durch die Hellzone gebildeten Musters liegt.

4. Verfahren nach einem der Ansprüche 1 bis 3, **dadurch gekennzeichnet, dass** im ersten Schritt mithilfe des Abdeckelements ein Schatten auf dem Träger erzeugt wird.

5. Verfahren nach Anspruch 4, **dadurch gekennzeichnet, dass** die Bestimmung der Stärke des ersten Lichttyps eine Messung der Stärke des diffusen Lichts in einem Bereich umfasst, der annähernd in der Mitte des durch die Dunkelzone mit dem Schatten gebildeten Musters liegt.

6. Verfahren zum Einsatz eines aktiven Fensters, das einen Schritt zur Durchführung des Verfahrens zur Bestimmung der Stärke des direkten Lichts und der Stärke des diffusen Lichts nach einem der vorhergehenden Ansprüche sowie einen Schritt zur Definition eines Durchlässigkeitsfaktors der Lichtstrahlung für das aktive Fenster in Abhängigkeit von der Stärke des direkten Lichts und der Stärke des diffusen Lichts umfasst.

7. Sonnenstrahlungssensor (10) mit einem Abdeckelement zur Abschirmung eines Teils der Sonnenstrahlung, welches Element so ausgebildet ist, dass bei Vorhandensein von direktem Licht auf einem Träger ein Muster mit einer Umrisslinie erzeugt wird, die einen Helligkeitskontrast zwischen mindestens einer Dunkelzone und mindestens einer Hellzone aufweist, **dadurch gekennzeichnet, dass** der Sensor
- eine Prüfeinrichtung (11) zur Bestimmung der Stärke einer Gesamtlichtstrahlung sowie der Stärke eines ersten Lichttyps, der wahlweise direktes Licht oder diffuses Licht sein kann, unter Verwendung eines Lichtgradienten zwischen der Dunkelzone und der Hellzone, an der Umrisslinie des Musters, welche Prüfeinrichtung mindestens einen geeigneten Detektor zur Erfassung mehrerer aufeinander folgender Messwerte der Lichtstärke an bestimmten Messpunkten des Trägers umfasst, die zwischen der Mitte und dem Außenrand des Trägers angeordnet sind, sowie
- ein Element zur Bestimmung der Stärke des zweiten Lichttyps umfasst, der in Abhängigkeit von der Wahl des ersten Lichttyps dem diffusen Licht oder dem direkten Licht entspricht, welches Bestimmungselement die Stärke der Gesamtlichtstrahlung sowie die Stärke des ersten Lichttyps verwendet, um die Stärke des zweiten Lichttyps zu bestimmen.

8. Sensor nach Anspruch 7, **dadurch gekennzeichnet, dass** das Abdeckelement einen lichtundurchlässigen, insbesondere flachen Deckel (15), der über dem Träger (16) angeordnet ist und eine Öffnung (17) aufweist, die den Durchtritt des Lichtstrahls (18) in Richtung des Trägers erlaubt.

9. Sensor nach Anspruch 7, **dadurch gekennzeichnet, dass** das Abdeckelement einen annähernd senkrecht zum Träger (13) angeordneten Stab (12) umfasst, der insbesondere eine flache Form aufweist.

10. Sensor nach einem der Ansprüche 7 bis 9, **dadurch gekennzeichnet, dass** die Prüfeinrichtung einen geeigneten Detektor zur Messung der Stärke der Gesamtlichtstrahlung umfasst, die sich aus der Summe der Stärke des direkten Lichts und der Stärke des diffusen Lichts zusammensetzt.

11. Aktives Fenster (20), das die Überwachung des Sonneneintrags einer Sonnenstrahlung durch das Fenster hindurch gewährleistet und einen Sensor (10) nach einem der Ansprüche 7 bis 10 sowie ein Überwachungssystem (21) umfasst, das von der Prüfeinrichtung (11) des Sensors (10) gelieferte Ausgangssignale (22) empfängt, welche die Stärke des direkten Lichts und die Stärke des diffusen Lichts abbilden, wobei das Überwachungssystem dazu ausgelegt ist, in Abhängigkeit von den Ausgangssignalen die Betätigung von Steuerorganen (23) des Fensters zu veranlassen, um den hindurchtretenden Sonnenstrahlungsfluss zu verändern.

## Claims

1. Method for determining the intensity of a direct light and the intensity of a diffuse light from a solar radiation (F1) comprising a first step consisting in exposing to the solar radiation a blocking element (12, 15, 17) for blocking a part of said radiation configured so as to form, on a support (13, 16), in the case of the presence of direct light, a pattern (14, 19) having an outline exhibiting a light contrasts between at least one dark area and at least one light area, **characterized in that** it comprises:
- a second step of determining the intensity of the overall light and determining the intensity of a first type of light chosen from the direct light and the diffuse light,
- the determination of the intensity of the first type of light comprising a use of a light gradient between the dark area and the light area at the outline of the pattern (14, 19) formed during the exposure to the solar radiation (F1) of the blocking element (12, 15, 17), and the use of the light gradient taking successive measurements of the incident light intensity on the support at measurement points of the support distributed between its centre and its perimeter,
- a third step of using the intensity of the overall light and the intensity of the first type of light to determine the intensity of a second type of light, corresponding respectively to the diffuse light or to the direct light depending on the choice of the first type of light.

2. Method according to Claim 1, **characterized in that** the first step is accompanied by the formation, by the blocking element, of a light beam formed exclusively by the direct light and directed towards the support.

3. Method according to Claim 2, **characterized in that** the determination of the intensity of the first type of light comprises a measurement of the intensity of the direct light in a sector substantially at the centre of the pattern formed by the light area.

4. Method according to one of Claims 1 to 3, **characterized in that** the first step is accompanied by the projection of a shadow by the blocking element, onto the support.

5. Method according to Claim 4, **characterized in that** the determination of the intensity of the first type of light comprises a measurement of the intensity of the diffuse light in a sector substantially at the centre of the pattern formed by the dark area constituting the shadow.

6. Method for operating an active window, comprising a step of implementing the method for determining the intensity of the direct light and the intensity of the diffuse light according to one of the preceding claims and a step of defining a coefficient of transmission of the radiation through the active window as a function of the intensity of the direct light and of the intensity of the diffuse light.

7. Sensor (10) of a solar radiation, comprising a blocking element for blocking a part of the solar radiation configured so as to form, on a support, in the case of the presence of a direct light, a pattern that has an outline exhibiting a light contrast between at least one dark area and at least one light area, **characterized in that** it comprises:
- a monitoring device (11) determining the intensity of an overall light and the intensity of a first type of light chosen from the direct light and a diffuse light by using a light gradient between the dark area and the light area at the outline of the pattern, said monitoring device comprising at least one detector suitable for performing a series of successive measurements, of the light intensity at measurement points of the support distributed between the centre and the perimeter of the support; and
- an element for determining the intensity of a second type of light, corresponding respectively to the diffuse light or to the direct light depending on the choice of the first type of light, the determination element using the intensity of the overall light and the intensity of the first type of light to determine the intensity of the second type of light.

8. Sensor according to Claim 7, **characterized in that** the blocking element comprises an opaque cover (15) in line with the support (16) notably adapting a planar form, the cover being provided with an aperture (17) allowing the passage of the light beam (18) towards the support.

9. Sensor according to Claim 7, **characterized in that** the blocking element comprises a mast (12) substantially perpendicular to the support (13), notably adopting a planar form.

10. Sensor according to one of Claims 7 to 9, **characterized in that** the monitoring device comprises a detector suitable for measuring the intensity of the overall light corresponding to the sum of the intensity of the direct light and of the intensity of the diffuse light.

11. Active window (20) monitoring the solar input of a solar radiation passing through the window, comprising a sensor according to one of Claims 7 to 11 and a monitoring system (21) receiving output signals (22) originating from the monitoring device (11) of the sensor (10) representative of the intensity of the direct light and of the intensity of the diffuse light, the monitoring system being capable of controlling, as a function of the output signals, the execution of operations for driving members (23) of the window to vary the flux of the solar radiation passing through it.
